# FASCICULE DE BREVET EUROPEEN

(11) **EP 0 402 456 B1**
(45) Date de publication et mention de la délivrance du brevet: **12.10.1994**
(21) Numéro de dépôt: 90901646.1
(22) Date de dépôt: 04.01.1990
(51) Int. Cl.: G06F 1/00, F16C 11/10, F16M 11/10

(54) **TERMINAL INFORMATIQUE PORTATIF A ECRAN PIVOTANT**
TRAGBARES DATENVERARBEITUNGSTERMINAL MIT SCHWENKBARER ANZEIGE
PORTABLE COMPUTER TERMINAL WITH A TILTING SCREEN

(30) Priorité: 05.01.1989 FR 8900066
(43) Date de publication de la demande: 19.12.1990
(73) Titulaire: TELEMECANIQUE, 92504 Rueil Malmaison Cedex (FR)
(72) Inventeur: MALGOUIRES, Pascal, F-06150 Cannes-la-Bocca (FR)
(74) Mandataire: de Saint-Palais, Arnaud Marie
(86) Numéro de dépôt international: FR9000005
(87) Numéro de publication internationale: WO9007742

(56) Documents cités:
- EP-A- 0 073 110
- GB-A- 2 175 749
- GB-A- 2 200 783
- US-A- 4 718 740
- US-A- 4 769 764
- US-A- 4 781 422

## Description

La présente invention concerne un terminal informatique portatif à écran pivotant tel que, par exemple, un micro-ordinateur.

D'une manière générale, on sait qu'un terminal informatique comprend habituellement un ensemble composé de trois éléments, à savoir :
- une unité centrale se présentant sous la forme d'un boîtier logeant la plupart des circuits électroniques utilisés par ce terminal (processeur, unités de mémoire à disquettes, cartouches, cartes mémoire, circuit d'alimentation, système de ventilation, etc...) ;
- un écran consistant habituellement en un tube cathodique ou en un afficheur à cristaux liquides ; et
- un clavier à touches alphanumériques, de type standard.

Dans les terminaux de ce genre, conçus pour être utilisés à poste fixe, ces trois éléments se présentent le plus souvent sous la forme de modules séparés de manière à permettre à l'utilisateur de les disposer au mieux, selon sa convenance.

Toutefois, grâce à la miniaturisation des composants, cet ensemble peut être réalisé en deux parties, l'unité centrale étant alors incorporée, soit au clavier, soit à l'écran.

Tel est notamment le cas dans les terminaux portatifs proposés à l'heure actuelle qui, le plus souvent, présentent une structure analogue à celle d'une mallette à deux compartiments articulés l'un à l'autre et pouvant être détachés l'un de l'autre, l'un des compartiments renfermant l'écran, tandis que l'autre contient le clavier ainsi que les principaux organes de l'unité centrale.

Cette miniaturisation a également permis de réaliser des appareils portatifs dits "de poche" dans lesquels les trois éléments précédemment évoqués sont rassemblés dans un même boîtier de très petites dimensions.

Toutefois, il s'avère qu'en dépit des possibilités de miniaturisation offertes grâce à l'évolution de la technique, il n'est guère souhaitable, pour des raisons d'ergonomie, de réduire les dimensions de l'appareil en deçà de certaines limites.

En effet, le clavier deviendrait difficilement utilisable et les possibilités d'affichage à l'écran seraient considérablement réduites, compte tenu de la lisibilité. C'est la raison pour laquelle les applications des ordinateurs de poche, qui souffrent de ces inconvénients, demeurent relativement limitées.

Les terminaux portatifs à usage professionnel précédemment évoqués, de dimensions beaucoup plus importantes, ne souffrent pas de ces inconvénients.

Toutefois, ces terminaux qui sont principalement conçus en fonction du critère de portabilité, bien souvent au détriment de l'ergonomie, ne sont pas toujours adaptés à toutes les conditions d'emploi pour lesquelles ils sont censés être utilisés.

Tel est le cas notamment lorsque ces terminaux sont utilisés dans des lieux (par exemple en usine, sur des chantiers ou même dans des véhicules) ne permettant pas une disposition usuelle du clavier et de l'écran vis-à-vis de l'opérateur.

L'invention a donc plus particulièrement pour but de supprimer ces inconvénients.

Contrairement à la tendance actuelle, elle propose un terminal portatif du type comprenant une unité centrale, un clavier et un écran, le clavier et l'écran constituant des unités distinctes de l'unité centrale et comprenant des moyens de fixation sur celle-ci, le clavier étant déconnectable, tandis que les moyens de fixation de l'écran comprennent au moins un levier articulé sur l'unité centrale et sur l'écran au moyen d'au moins deux articulations respectives distantes l'une de l'autre et axées parallèlement l'une par rapport à l'autre.

Un tel terminal est connu de l'état de la technique GB-A-2,200,783.

Selon l'invention comme définie dans la revendication 1, ce terminal est plus particulièrement caractérisé en ce que ledit levier est articulé sur une face supérieure de l'unité centrale et présent une forme coudée de manière à permettre à l'écran de prendre une position rabattue contre une face frontale de l'unité centrale.

De même, les moyens de fixation du clavier pourront comprendre des moyens d'indexation et d'encliquetage déverrouillables permettant de rabattre ledit clavier contre la susdite face frontale de l'unité centrale sur laquelle se rabat l'écran.

Selon un mode d'exécution préféré de l'invention :
- l'unité centrale présente une face frontale et, transversalement à cette face frontale, une base définissant une surface de sustentation et un dessus opposé à la base ;
- l'écran présente, quant à lui, une face frontale incorporant la surface de visualisation et bordée par deux faces latérales opposées qui s'étendent transversalement par rapport à cette face frontale ;
- les moyens de fixation de l'écran comprennent alors deux leviers coudés parallèles qui s'articulent, par l'une de leurs extrémités, en deux points respectifs situés dans une région centrale desdites faces latérales, selon un premier axe d'articulation commun parallèle à la face frontale de l'écran et, par leurs autres extrémités, sur le dessus de l'unité centrale, selon un second axe d'articulation parallèle au premier ainsi qu'à la face frontale de l'unité centrale et qu'à la surface de sustentation.

Le clavier pourra également présenter une forme relativement plane et comprendre des moyens permettant sa fixation déconnectable sur une région de l'unité centrale voisine de la base, ces moyens de fixation étant conformés de manière à faire office d'indexation et de verrouillage permettant de rabattre le clavier contre la face frontale de l'unité centrale.

Dans ce cas, moyennant une conformation appropriée de l'écran, du clavier et des susdits moyens de fixation, le terminal pourra être disposé dans l'une des deux configurations de transport suivantes :
- l'écran est rabattu contre la face frontale de l'unité centrale et se trouve au moins en partie recouvert par le clavier ;
- le clavier est rabattu contre la face frontale de l'unité centrale et se trouve au moins en partie recouvert par l'écran.

Un mode d'exécution d'un terminal selon l'invention sera décrit ci-après, à titre d'exemple non limitatif, avec référence aux dessins annexés dans lesquels :
La figure 1 est une vue de côté (en perspective schématique) du terminal en position déployée, cette vue permettant de montrer différentes positions d'utilisation de l'écran ;
Les figures 2 à 6 sont des vues du terminal en position repliée, la figure 2 montrant le côté droit, la figure 3, le côté gauche, la figure 4, la face antérieure fermée, la figure 5, la face antérieure ouverte, et la figure 6 le dessus ; et
La figure 7 est une représentation schématique, en perspective, d'un dispositif d'articulation à bague de friction, utilisable dans le terminal représenté sur les figures 1 à 6.

Le terminal portatif représenté sur ces dessins comprend, conformément à l'invention, trois modules distincts, à savoir : une unité centrale 1, un clavier 2 et un écran 3.

Dans cet exemple, l'unité centrale 1 se présente sous la forme d'un boîtier dont la face frontale 4, les faces latérales 5, 6 et le dessus 7 sont visibles sur les dessins.

Ce boîtier présente, dans un plan perpendiculaire à sa face frontale 4, une section sensiblement en L et, dans un plan perpendiculaire, une section sensiblement rectangulaire.

La face frontale 4 comprend, dans une région adjacente à la base 8 du boîtier, une avancée parallélépipédique 10 formant la barre horizontale du L, dont la face antérieure 11 est munie de deux ergots 12, 13 dont le rôle sera précisé par la suite.

Par ailleurs, la face latérale 6 du boîtier est prolongée au-dessus de l'avancée par une cloison 14 qui délimite, avec la face supérieure de l'avancée 10, une cavité 16 ouverte à l'avant qui sert à recevoir l'écran 3, en position repliée du terminal.

La face latérale 6 porte les éléments de connexion C du terminal, tandis que la face latérale 5 est munie de trappes d'accès 18 aux unités de mémoire, par exemple à des unités de lecture de disquettes.

La face supérieure 7 renferme des moyens d'articulation d'une poignée 20 ainsi que des leviers coudés 21, 22 de support de l'écran 3.

Ce dernier consiste en un afficheur à cristaux liquides et présente une forme plane, sensiblement parallélépipédique, dont la face antérieure 23 constitue la surface de visualisation.

Cet écran est relié au boîtier de l'unité centrale au moyen des leviers coudés 21, 22 qui s'étendent dans des plans perpendiculaires à la face frontale 4 et qui sont articulés :
- par l'une de leurs extrémités 21′, 22′, à la face supérieure 7, autour d'un premier axe d'articulation commun 24 parallèle à la face frontale 4 et à la base 8, logé sous la face 7, et
- par les deux autres extrémités 21˝, 22˝, sur les faces latérales 26, 27 de l'écran 3, autour d'un axe d'articulation commun parallèle à l'axe 24, par exemple au moyen de deux tourillons situés sensiblement au centre des faces latérales 26, 27.

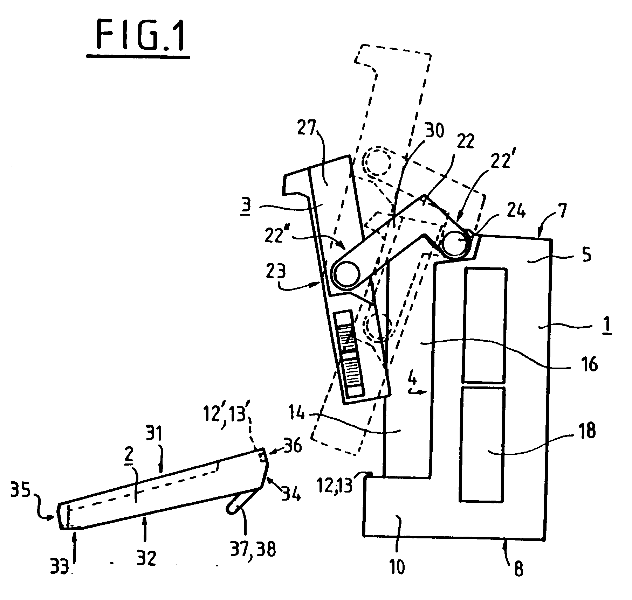

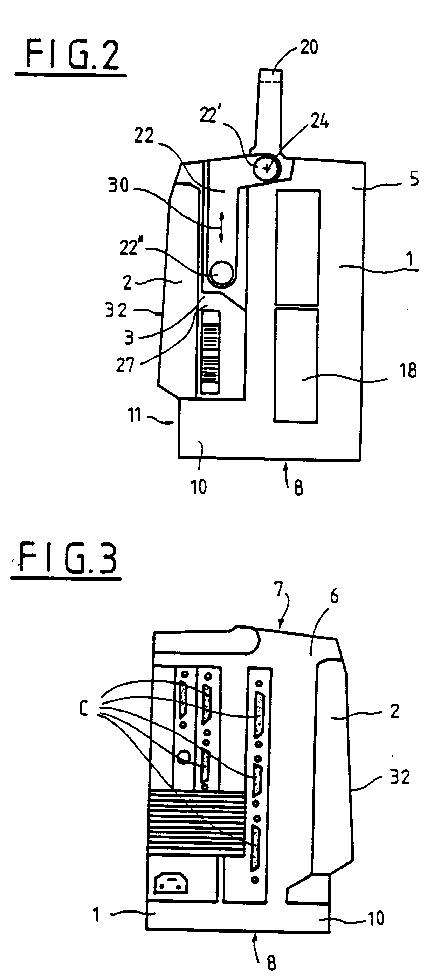

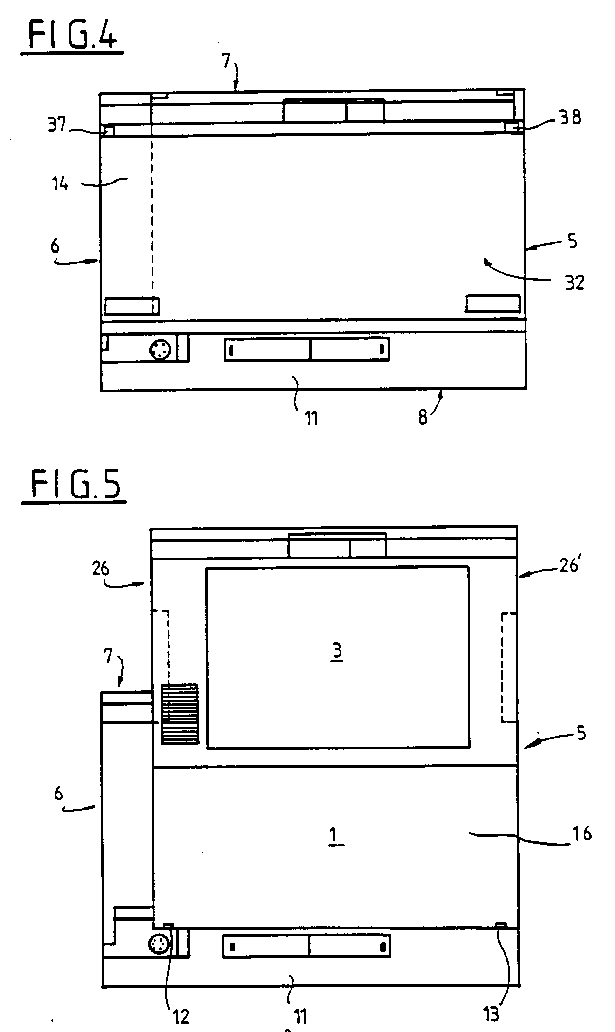

Les leviers 21, 22 sont dimensionnés et conformés de manière à ce qu'ils puissent occuper une multiplicité de positions entre :
- une position déployée, dans laquelle le bras 30 des leviers 21, 22, articulé à l'écran 3, s'étend sensiblement à 15° au-dessus de la face supérieure 7, position dans laquelle l'écran 3 peut pivoter sur 120° autour de ses tourillons (position représentée en traits interrompus, figure 1) ; et
- une position repliée, dans laquelle les bras 30 des leviers 21, 22 sont sensiblement disposés contre la face frontale 4, et l'écran 3 vient s'engager dans la cavité 16 parallèlement à ladite face frontale 4 (position représentée sur les figures 2 à 5).

Dans cet exemple, le levier 22 s'étend sensiblement au niveau de la face latérale 5, tandis que le levier 21 est décalé vers l'intérieur par rapport à la face latérale 6, la distance séparant les deux leviers 21, 22 étant inférieure à la distance entre les deux faces latérales 5, 6 de l'unité centrale 1.

Le clavier 2 se présente, quant à lui, sous la forme d'un boîtier plat, de forme sensiblement parallélépipédique, dont la face frontale 31 est équipée d'une pluralité de touches appropriées aux fonctions du terminal et dont le fond 32 comprend deux zones biseautées 33, 34 respectivement situées au niveau de ses bordures antérieure 35 et postérieure 36.

Les dimensions de ce clavier 2 sont prévues de telle manière que le fond 32 puisse jouer le rôle d'un capot venant refermer la cavité 16 de la face frontale 4 de l'unité centrale 1 en position repliée du terminal.

Le clavier 2 comprend en outre, dans sa partie arrière, deux bras parallèles 37, 38 articulés autour d'un axe commun parallèle à la bordure arrière 36.

Ces bras 37, 38, une fois orientés vers le bas, servent de piètement permettant de disposer le clavier 2 selon l'inclinaison souhaitée par l'utilisateur. La bordure postérieure 36 du clavier 3 comporte deux cavités 12′, 13′ s'emboîtant sur les ergots 12, 13 de l'avancée 10 de l'unité centrale 1, ce qui permet de faire pivoter le clavier indexé sur ces ergots pour le rabattre contre la face frontale 4 et l'immobiliser par un dispositif d'encliquetage déverrouillable 37, 38.

Grâce à ces dispositions, le terminal peut être replié dans la position représentée figures 2 à 4 et 6, en rabattant tout d'abord l'écran 3 à plat contre la face frontale 4 de l'unité centrale, partiellement à l'intérieur de la cavité 16, puis en rabattant ensuite le clavier 2 contre ladite face frontale 4 munie de l'écran 3, le fond 32 du clavier étant orienté vers l'extérieur de manière à jouer le rôle de capot.

Des moyens de verrouillage (non représentés) sont alors prévus pour assurer un maintien efficace du terminal en position repliée et éviter ainsi qu'il ne puisse s'ouvrir au cours de son transport.

Il convient de noter que les liaisons électriques entre l'unité centrale 1 et l'écran 3 sont effectuées à l'aide de conducteurs passant à l'intérieur des leviers 21, 22, tandis que les liaisons électriques clavier/unité centrale s'effectuent par un câble électrique souple pouvant se loger dans un réceptacle prévu dans le clavier 3.

Tel que précédemment décrit, le terminal présente une grande souplesse d'utilisation.

En effet, quelle que soit la position de l'unité centrale 1, l'opérateur peut incliner l'écran de manière à l'orienter en fonction de la position où il se trouve et où il a disposé le clavier 2.

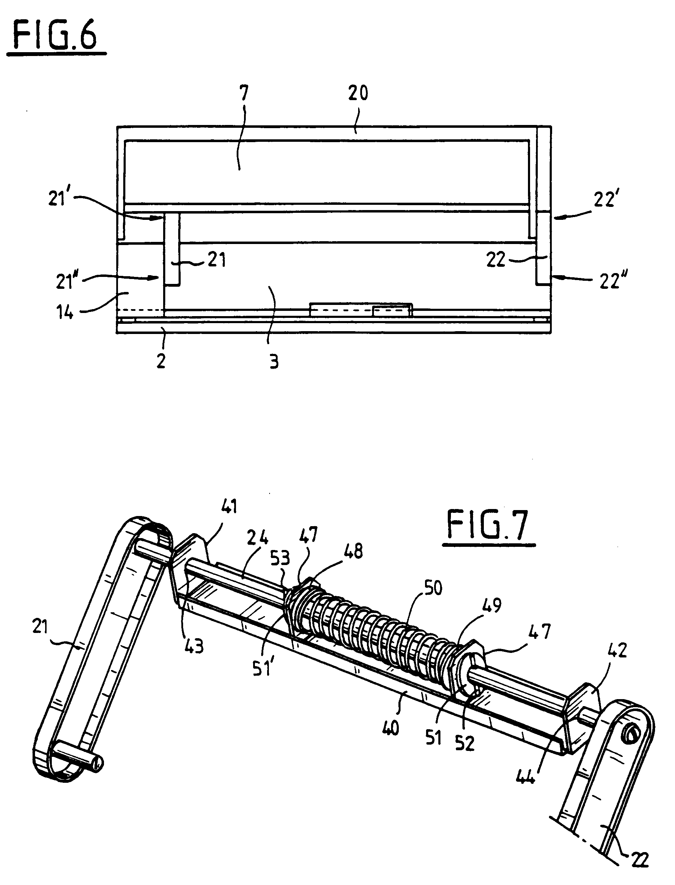

Le maintien de cet écran 3 dans la position choisie peut alors être obtenu en utilisant, pour les articulations situées entre les leviers 21, 22 et l'écran 3, un dispositif à bague de friction du type de celui représenté sur la figure 7.

Ce dispositif fait intervenir un support d'articulation 40 de type classique, en forme de U dont les ailes parallèles 41, 42 sont munies de deux perçages respectifs 43, 44 au travers desquels passe et peut pivoter librement l'axe d'articulation 24 aux extrémités duquel sont fixés les leviers 21, 22.

Ce support d'articulation 40 comprend en outre, dans l'espace compris entre les ailes 41, 42, deux ailes transversales supplémentaires 46, 47 présentant une certaine souplesse par rapport au support 40, et au travers desquelles l'axe 24 pivote librement.

Ce dispositif fait en outre intervenir quatre bagues de friction 48 et 49, 51 et 51′ montées coaxialement sur l'axe 24, respectivement de part et d'autre des deux ailes 46, 47, ces deux bagues 48, 49 pouvant axialement coulisser le long de l'axe 24 tout en étant entraînées en rotation par ce dernier.

Les deux bagues 48, 49 sont soumises à l'effort d'un ressort 50 qui tend à les pousser contre les ailes 46, 47. Du fait de la souplesse de ces ailes 46, 47, cet effort est reporté sur les bagues 51, 51′ retenues par les goupilles 52, 53. En conséquence, chacune des ailes 46, 47 se trouve serrée entre un couple de bagues 48, 51-49, 51′. Le ressort 50 est alors conçu de manière à exercer sur les bagues 48, 49 une pression suffisante pour engendrer, au niveau des jonctions bague 51′/aile 46/bague 48 et bague 49/aile 47/bague 51, un couple de frottement supérieur au couple maximal engendré par le poids de l'écran 3, quelle que soit sa position par rapport à l'unité centrale 1.

Grâce à cette particularité, les changements d'orientation de l'écran 3 ne peuvent être opérés que par une action volontaire de l'opérateur.

Il est clair qu'un dispositif d'articulation similaire pourra être utilisé pour l'articulation entre les leviers 21, 22 et l'unité centrale 1.

Par ailleurs, il convient d'insister sur le fait que l'invention ne se limite pas au mode d'exécution précédemment décrit. Ainsi les moyens de fixation de l'écran peuvent ne comprendre qu'un seul levier articulé par exemple au milieu de l'une des faces de l'unité centrale, de préférence la face supérieure, ce levier étant coudé de manière à pouvoir rabattre l'écran contre une autre face de l'unité centrale, de préférence contre la face frontale.

## Revendications

1. Terminal informatique portatif du type comprenant une unité centrale (1), un clavier (2) et un écran (3), le clavier (2) et l'écran (3) constituant des unités distinctes de l'unité centrale (1) et comprenant des moyens de fixation sur celle-ci, le clavier (2) étant déconnectable, tandis que les moyens de fixation de l'écran comprennent au moins un levier (21, 22) articulé sur l'unité centrale (1) et sur l'écran (3) au moyen d'au moins deux articulations respectives distantes l'une de l'autre et axées parallèlement l'une par rapport à l'autre (axes 24, 28),
caractérisé en ce que ledit levier (21, 22) est articulé sur une face supérieure (7) de l'unité centrale (1) et présente une forme coudée de manière à permettre à l'écran (3) de prendre une position rabattue contre une face frontale (4) de l'unité centrale (1).

2. Terminal selon la revendication 1,
caractérisé en ce que les moyens de fixation du clavier (2) comprennent des moyens d'indexation (12, 13, 12′, 13′) et d'encliquetage déverrouillable (37, 38) permettant au clavier de prendre une position rabattue sensiblement contre la susdite face frontale (4) de l'unité centrale (1).

3. Terminal selon la revendication 1,
caractérisé en ce qu'il comprend une position repliée dans laquelle l'écran (3) est rabattu contre la susdite face frontale (4), et en ce que le clavier, en position rabattue, est appliqué contre l'écran.

4. Terminal selon la revendication 1,
caractérisé en ce que la susdite face frontale (4) forme une cavité ouverte (16) destinée à contenir au moins partiellement l'écran (3), en position rabattue de ce dernier.

5. Terminal selon la revendication 1,
caractérisé en ce qu'il comprend deux leviers coudés (21, 22) articulés :
- par l'une de leurs extrémités (21′, 22′), sur la face supérieure (7) de l'unité centrale, autour d'un premier axe d'articulation commun parallèle aux deux susdites faces (4, 7), et
- par les deux autres extrémités, sur deux faces latérales opposées (26, 26′) de l'écran, autour d'un second axe parallèle au premier et passant dans des régions centrales desdites faces latérales (26, 26′).

6. Terminal selon la revendication 5,
caractérisé en ce que l'articulation des susdits leviers (21, 22) sur l'écran (3) fait intervenir :
- un support d'articulation (40) présentant deux ailes transversales (46, 47), au travers duquel pivote librement un axe d'articulation (24) aux extrémités duquel sont fixés les deux bras (30) des leviers coudés (21, 22) ;
- deux bagues de friction (48, 49) montées coaxialement sur l'axe (24) dans la portion comprise entre les deux ailes (46, 47), de manière à pouvoir axialement coulisser tout en étant entraînées en rotation par cet axe (24) ; et
- un ressort (50) disposé entre ces deux bagues (48, 49) de manière à les appliquer respectivement sur les deux ailes.

7. Terminal selon la revendication 6,
caractérisé en ce que les susdites ailes (46, 47) sont souples et viennent en appui, du côté opposé au ressort, sur deux bagues de friction supplémentaires respectives (51, 51′) axialement coulissantes sur l'axe (24) mais entraînées en rotation par celui-ci, ces deux bagues de friction supplémentaires (51, 51′) étant axialement retenues, d'un côté, par deux butées respectives (52, 53) solidaires de l'axe (24).

## Patentansprüche

1. Tragbares Datenverarbeitungsterminal des Typs mit einer Zentraleinheit (1), einer Tastatur (2) und einem Anzeigeschirm (3), wobei die Tastatur (2) und der Schirm (3) von der Zentraleinheit (1) getrennte Einheiten bilden und Befestigungsmittel an der letzteren aufweisen und die Tastatur (2) abnehmbar ist, während die Befestigungsmittel des Schirms mindestens einen Hebel (21, 22) aufweisen, der an die Zentraleinheit (1) und den Schirm (3) durch mindestens zwei jeweilige Scharniere angelenkt ist, die voneinander getrennt und deren Achsen parallel zueinander angeordnet sind (Achsen 24, 28), dadurch gekennzeichnet, dass besagter Hebel (21, 22) an eine obere Fläche (7) der Zentraleinheit (1) angelenkt und knieförmig gebogen ist, damit der Schirm (3) gegen die Vorderseite (4) der Zentraleinheit (1) geklappt werden kann.

2. Terminal nach Anspruch 1,
dadurch gekennzeichnet, dass die Befestigungsmittel der Tastatur (2) Indexiermittel (12, 13, 12′, 13′) und lösbare Einschnappmittel (37, 38) aufweisen, damit die Tastatur im wesentlichen gegen besagte Vorderseite (4) der Zentraleinheit (1) geklappt werden kann.

3. Terminal nach Anspruch 1,
dadurch gekennzeichnet, dass es eine zusammengeklappte Stellung einnehmen kann, in welcher der Schirm (3) gegen die besagte Vorderseite (4) geklappt ist und dass die Tastatur (2) in der eingeklappten Stellung gegen den Schirm angelegt ist.

4. Terminal nach Anspruch 1,
dadurch gekennzeichnet, dass besagte Vorderseite (4) eine offene Vertiefung (16) bildet, die mindestens teilweise den Schirm (3) aufnimmt, wenn dieser dagegengeklappt ist.

5. Terminal nach Anspruch 1,
dadurch gekennzeichnet, dass es zwei knieförmig gebogene Hebel (21, 22) aufweist, die wie folgt angelenkt sind :
- durch eines ihrer Enden (21′, 22′) an die obere Fläche (7) der Zentraleinheit, um eine erste, gemeinsame, zu besagten beiden Flächen (4, 7) parallele, Achse drehbar, und
- durch die beiden anderen Enden an zwei gegenüberliegende Seitenflächen (26, 26′) des Schirms, um eine zweite, zur ersten parallele, Achse drehbar.

6. Terminal nach Anspruch 5,
dadurch gekennzeichnet, dass zur Anlenkung der besagten Hebel (21, 22) an den Schirm (3) verwendet werden :
- ein Gelenklager (40) mit zwei Querflügeln (46, 47), in denen eine hindurchreichende Drehachse (24) frei drehbar ist, an deren Enden die beiden Arme (30) der knieförmig gebogenen Hebel (21, 22) befestigt sind,
- zwei Reibungsringe (48, 49), die koaxial auf der Achse (24) im Bereich zwischen den beiden Flügeln (46, 47) so angeordnet sind, dass sie axial verschoben werden und gleichzeitig durch besagte Achse (24) in Drehung versetzt werden können ; und
- eine Feder (50), die so zwischen den beiden Ringen (48, 49) angeordnet ist, dass diese Ringe jeweils an die beiden Flügel angelegt werden.

7. Terminal nach Anspruch 6,
dadurch gekennzeichnet, dass besagte Flügel (46, 47) biegsam sind und jeweils gegen auf der Seite gegenüber der Feder angeordnete zusätzliche Reibungsringe (51, 51′) zur Anlage kommen, die axial auf der Achse (24) verschiebbar sind, aber von dieser in Drehung versetzt werden, wobei diese zusätzlichen beiden Reibungsringe (51, 51′) auf der einen Seite jeweils von mit der Achse (24) fest verbundenen Anschlägen (52, 53) axial angehalten werden.

## Claims

1. A portable data-processing terminal of the type comprising a central unit (1), a keyboard (2) and a screen (3), the keyboard (2) and the screen (3) forming separate units of the central unit (1) and comprising means for fixing them thereon, the keyboard (2) being disconnectable, whereas the means for fixing the screen comprise at least one lever (21, 22) articulated to the central unit (1) and to the screen (3) by means of at least two respective articulations spaced apart from each other and disposed parallel to each other (shafts 24, 28),
characterized in that said lever (21, 22) is articulated to a first face (7) of the central unit (1) and has a cranked shape so as to permit the screen (3) to take up a position folded back against a front face (4) of the central unit (1).

2. The terminal as claimed in claim 1,
characterized in that said means for fixing the keyboard (2) comprise indexation (12, 13, 12′, 13′) and unlockable clipping means (37, 38) permitting the keyboard to take up a position folded back substantially against said front face (4) of the central unit (1).

3. The terminal as claimed in claim 1,
characterized in that it comprises a folded up position in which the screen (3) is folded back against said front face (4) and in that the keyboard, in the folded up position, is applied against the screen.

4. The terminal as claimed in claim 1,
characterized in that said front face (4) forms an open cavity (16) containing the screen (3) at least partially, in the folded up position thereof.

5. The terminal as claimed in claim 1,
characterized in that it comprises two cranked levers (21, 22) which are articulated :
- by one of their ends (21′, 22′) to the upper face (7) of the central unit, about a first common articulation shaft parallel to said two faces (4, 7), and
- by the other two ends, to two opposite lateral faces (26, 26′) of the screen, about a second shaft parallel to the first and passing through central regions of said lateral faces (26, 26′).

6. The terminal as claimed in claim 5,
characterized in that the articulation of said levers (21, 22) to the screen (3) comprises :
- an articulation support (40) having two transverse flanges (46, 47) through which an articulation shaft (24) may freely rotate, to the ends of which the two arms of the cranked levers (21, 22) are fixed ;
- two friction rings (48, 49) mounted coaxially on said shaft (24) in the portion between said two flanges (46, 47) so as to be able to slide axially while being driven in rotation by said shaft (24) ; and
- a spring (50) disposed between these two rings (48, 49) so as to apply them respectively against the two flanges.

7. The terminal as claimed in claim 6,
characterized in that said flanges (46, 47) are flexible and bear, on the side opposite the spring, on two respective additional friction rings (51, 51′) axially slidable on said shaft (24), but driven in rotation thereby, these two additional friction rings (51, 51′) being retained axially, on one side, by two respective stops (52, 53) fast with said shaft (24).
